# EUROPEAN PATENT SPECIFICATION

(11) **EP 3 527 301 B1**
(45) Date of publication and mention of the grant of the patent: **25.08.2021**
(21) Application number: 17860966.5
(22) Date of filing: 11.10.2017
(51) Int. Cl.: B21K 1/76, B21J 5/02, B21J 5/10, B21J 5/12, B21D 53/88, B62D 1/16

(54) **METHOD FOR MANUFACTURING UNIVERSAL JOINT USING PIPE**
VERFAHREN ZUR HERSTELLUNG EINES UNIVERSALGELENKS UNTER VERWENDUNG EINES ROHRES
PROCÉDÉ DE FABRICATION D'UN JOINT UNIVERSEL À PARTIR D'UN TUBE

(30) Priority: 11.10.2016 KR 20160131241; 07.04.2017 KR 20170045159
(43) Date of publication of application: 21.08.2019
(73) Proprietor: Lee, Yang Hwa, Busan 48119 (KR)
(72) Inventor: LEE, Byeong Hwa, Busan 47753 (KR)
(74) Representative: Sach, Greg Robert
(86) International application number: PCT/KR2017/011131
(87) International publication number: WO 2018/070758

(56) References cited:
- WO-A1-2016/006803
- KR-A- 20110 045 311
- KR-A- 20150 139 164
- KR-B1- 100 655 940
- KR-B1- 100 767 105
- US-A- 2 227 436
- US-A- 6 105 413

## Description

### Technical Field

The present invention relates to a method for manufacturing a universal joint from a pipe, in which the universal joint is applied to a steering apparatus for manipulating the traveling direction of a vehicle as desired, and more specifically relates to the provision of a method for manufacturing a universal joint from a pipe, which enables a shaft joint and a pipe joint integrated with yokes, respectively, to be each manufactured by using a method of forming, pressing and machining a material obtained by cutting a pipe to a predetermined length, thereby reducing manufacturing cost, improving production efficiency, and fulfilling durability while providing the effect of reducing the weight of a product.

### Background Art

In general, a steering apparatus for enabling a driver to change the traveling direction of a vehicle as desired is provided to the vehicle. The steering apparatus includes: a steering wheel disposed in front of a driver's seat, and configured to change the traveling direction of a vehicle through the manipulation of the driver; a steering column disposed beneath the steering wheel; a steering gearbox configured to switch the rotation of the steering wheel from rotation movement to rectilinear movement and to also change the directions of tires by increasing steering force; and a universal joint configured to transfer rotating force, transferred to the steering column, to the steering gearbox.

The universal joint includes a shaft joint and a pipe joint configured to transfer rotating force to the shaft joint. In this case, splines that are formed on the outer surface of the shaft joint in a protrusion and depression form are fitted into splines that are formed on the inner surface of the pipe joint in a protrusion and depression form so that the two members can slide in an axial direction while transferring rotating force.

Yokes are formed at ends of the shaft joint and the pipe joint, the yoke formed in the shaft joint is connected to the steering column, and the yoke formed in the pipe joint is connected to the gearbox.

A conventional technology regarding the above-described universal joint is a "universal joint for a vehicle and a method for manufacturing the same" disclosed in Korean Patent Application Publication No. 10-2006-0116099 (published on November 14, 2006), and the method includes: a shaft joint formation step of forming a shaft portion and a yoke portion in an integrated form by inserting a material having a predetermined length and outer diameter into dies functioning as a mold and then plastically deforming the material by pressing the material with a punch; a hole formation step of forming a connection hole in the yoke portion of the shaft joint in order to connect another joint, such as a spider, with the yoke portion of the shaft joint; a step of forming a gear on the outer surface of the shaft portion; a pipe joint formation step of forming a pipe portion and a yoke portion in an integrated form by inserting a material having a predetermined length and outer diameter into dies functioning as a mold and then plastically deforming the material by pressing the material with a punch; a hole formation step of forming a connection hole in the yoke portion of the pipe joint in order to connect another joint, such as a spider, with the yoke portion of the pipe joint; a step of forming splines corresponding to the gear of the shaft portion on the inside of the formed pipe portion; and an assembly step of achieving the form of a completed universal joint by inserting the shaft portion of the manufactured shaft joint into the pipe portion of the manufactured pipe joint.

Another conventional technology is a "yoke manufacturing method" disclosed in Korean Patent No. 10-1322363 (published on October 28, 2013), and the method includes: a first step of machining a yoke formation member by cutting a round rod raw material and subjecting the cut material to tube extrusion molding so that a knuckle portion and a shaft portion are formed; a second step of forming plate-shaped tensile portions on both sides of the knuckle portion by punching the knuckle portion of the yoke formation member machined at the first step; a third step of performing piercing and punching a connection hole across the insides of the tensile portions so that the inside of the shaft portion is pierced toward the knuckle portion on which the tensile portions have been formed at the second step; a fourth step of performing primary bending so that the tensile portions in which the connection hole has been formed at the third step are bent above the knuckle portion; a fifth step of performing secondary bending so that the tensile portions primarily bent at the fourth step is bent perpendicular to the knuckle portion; a sixth step of forming splines on the inner circumferential surface of the shaft portion that has been pierced at the third step.

Still another conventional technology is a "method for manufacturing a pipe joint for the steering apparatus of a vehicle" disclosed in Korean Patent No. 10-1632702 (published on June 22, 2016), and there is provided the method for manufacturing a pipe joint for the steering apparatus of a vehicle, the method including: a center groove formation step of forming a center groove on one side of a material by pressing the material with a punch after obtaining the cut material by cutting a material fed from one side of a forming machine and supplying the cut material to center groove forming dies; a primary backward extrusion formation step of forming an inner diameter hole and a pipe on one side of the material by moving a die pin forward after locating the material in front of primary backward extrusion forming dies; a secondary backward extrusion formation step of further increasing the inner diameter hole by moving the die pin forward after locating the material in front of secondary backward extrusion forming dies; a yoke preliminary formation step of pressing the material with a punch after locating the material in front of yoke preliminary forming dies; a yoke formation step of forming a yoke across which a connection groove is formed by pressing the material with a yoke forming punch after locating the material in front of yoke forming dies via a transfer machine and completely forming the inner diameter hole with a die pin; and a spline formation step of forming splines on a pipe of the material; wherein the center groove formation step, the primary backward extrusion step, the secondary backward extrusion step, the yoke preliminary formation step, the yoke formation step, and the spline formation step are perform through cold rolling in a forming machine, wherein the yoke preliminary formation step is performed such that a preliminary yoke which is larger than the outer diameter of the material and at the center of which a guide groove is formed is formed on the opposite side of the material, in which the inner diameter hole has been formed, by pressing the material, formed at the secondary backward extrusion step, with a punch after placing the material in front of yoke preliminary forming dies, wherein the yoke formation step is performed such that the yoke across which the connection groove is formed is formed in the preliminary yoke by pressing the preliminary yoke with yoke forming dies, and wherein the spline formation step is performed such that splines are formed on a pipe in a protrusion and depression form by introducing the material, formed at the yoke formation step, into spline dies and pressing the material with a spline-shaped punch.

The above-described conventional technologies are based on round rods that are raw materials. The yoke portion is formed through the steps of flattening a rod-shaped material through rolling, bending the material, and then machining the material. Furthermore, a through hole needs to be formed across the center of the pipe joint through extrusion molding. Accordingly, their manufacturing process is complicated, and thus it is difficult to improve production efficiency.

Furthermore, the shaft joint is configured such that a spline shaft is formed on the outside of a rod-shaped material. Accordingly, it is difficult to provide the shaft joint in a lightweight form, and also it is difficult to contribute to the effort to reduce part weight in order to improve fuel efficiency in the automotive industry.

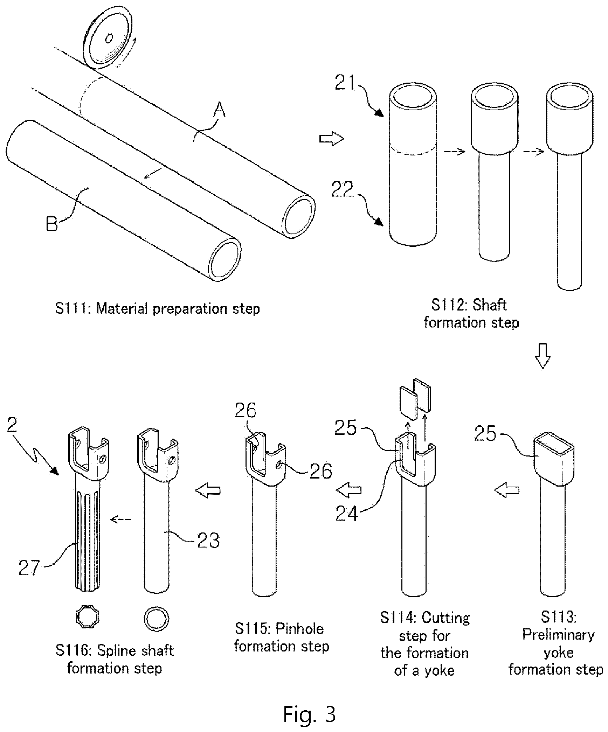

KR 10/0767105 B1 discloses a yoke manufacturing method to increase durability and working efficiency by forming a knuckle part on a hollow pipe and forming a shaft having a spline on the inner surface of the pipe integrally. More specifically, with reference to the figures 3a-3j of this document, said manufacturing method comprises the steps of selecting a pipe (figure 3a), reducing the outer diameter (figure 3b), yoke forming (figure 3d), cutting (figure 3e), pin hole forming (figure 3i), and spline shaft forming (figure 3j). Hence KR 10/0655940 B1 discloses a yoke manufacturing method which improves durability of a yoke and efficiency of working by forming a knuckle part on an upper portion of a hollow pipe and forming a shaft in which a spline is formed on an inner face of the pipe below the knuckle part. US 6105413 A discloses a method for forming a one-piece steering shaft member, such as an externally splined male steering shaft member (or yoke shaft) or an internally splined female steering shaft member (or slip yoke).

### Disclosure

### Technical Problem

Accordingly, the present inventor has contrived and developed the present invention in order to overcome the problems of the conventional methods for manufacturing a universal joint.

### Technical Solution

First, the present invention relates to a method of manufacturing a shaft joint of a universal joint according to claim 1.

Second, the present invention relates to a method of manufacturing a pipe joint of a universal joint according to claim 2.

### Advantageous Effects

According to the method for manufacturing a universal joint using a pipe that is provided by the present invention, a shaft joint and a pipe joint integrated with yokes, respectively, are manufactured using seamless pipes, and thus a reduction in cost may be expected.

Furthermore, production efficiency may be improved by minimizing machining, and the weight of a completed universal joint may be reduced by providing the universal joint in a hollow state, thereby providing the effect of highly contributing to an effort to reduce the weight of a vehicle.

### Description of Drawings

FIG. 1 shows a perspective view showing the appearance of a universal joint that is provided and manufactured by the present invention;
FIG. 2 shows a view showing a process of manufacturing the shaft joint of the universal joint, according to the present invention;
FIG. 3 shows a process of manufacturing the shaft joint of a universal joint, according to a method that is not part of the present invention;
FIG. 4 shows a view showing a process of manufacturing the pipe joint of the universal joint, according to the present invention; and
FIG. 5 shows a process of manufacturing the pipe joint of a universal joint, according to a method that is not part of the present invention.

### Best Mode

A method for manufacturing a universal joint using a pipe, which is provided by the present invention, will be described based on the accompanying drawings below.

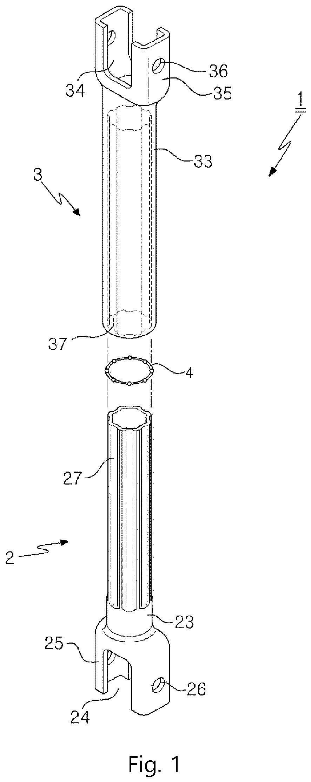

FIG. 1 shows a perspective view showing the appearance of a universal joint that is provided and manufactured by the present invention.

A steering apparatus that is provided to enable a driver to change the traveling direction of a vehicle as desired is applied to the vehicle.

The steering apparatus includes: a steering wheel disposed in front of a driver's seat and configured to change the traveling direction of a vehicle through the manipulation of the driver; a steering column disposed beneath the steering wheel; a steering gearbox configured to switch the rotation of the steering wheel from rotation movement to rectilinear movement and to also change the directions of tires by increasing steering force; and a universal joint 1 configured to transfer rotating force, transferred to the steering column, to the steering gearbox.

As shown in FIG. 1, the universal joint 1 includes a shaft joint 2 and a pipe joint 3 configured to transfer rotating force to the shaft joint 2, a spline shaft 27 is formed on the outer surface of the shaft joint 2 in a protrusion and depression form and a spline boss 37 is formed on the inner surface of the pipe (A) joint 3 in a protrusion and depression form so that the two members can slide in an axial direction while transferring rotating force in the state of having been fitted into each other. In this case, there is provided a configuration in which a bearing 4 is interposed between the contact surfaces of the spline shaft 27 and the spline boss 37 in order to reduce frictional force.

The universal joint 1 using the pipe A, which is provided by the present invention, is characterized in that the shaft joint 2 and the pipe joint 3, which are configured as described above, are each manufactured using the pipe A, rather than using the conventional round rod material, thereby reducing manufacturing cost, improving production efficiency, and fulfilling durability while providing the effect of reducing the weight of a product.

A method for manufacturing the shaft joint 2 using a pipe A and a method for manufacturing the pipe joint 3 using a pipe A will be described in greater detail below.

### - Manufacture of the shaft joint -

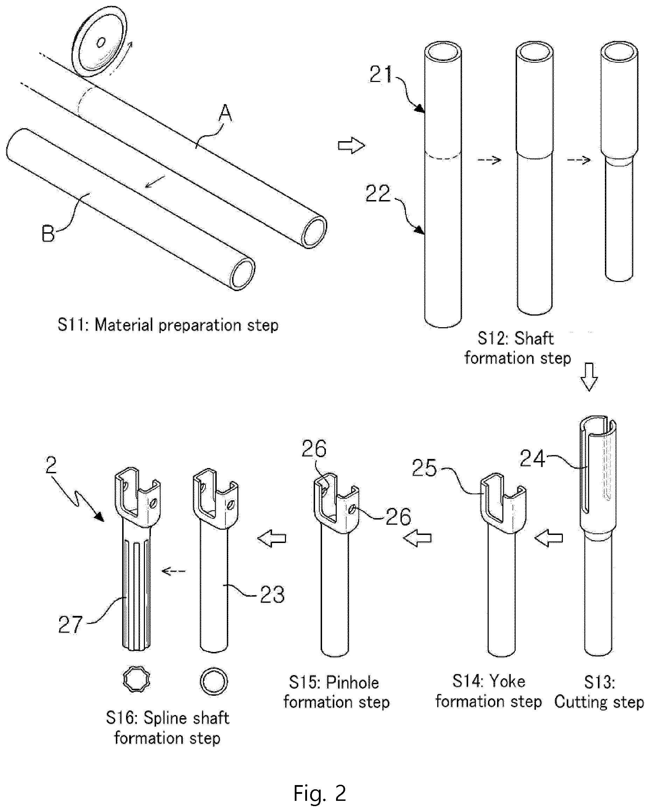

FIG. 2 shows a view showing a process of manufacturing the shaft joint of the universal joint that is provided by the present invention.

The process of manufacturing the shaft joint 2 of a universal joint 1 using a pipe A according to the present invention, in which a yoke 25 is integrated with the shaft joint 2, is performed in the sequence of: 1) a material preparation step S11; 2) a shaft formation step S12; 3) a cutting step S13 for forming a head that corresponds to the yoke 25; 4) a yoke formation step S14; 5) a pinhole formation step S15; and 6) a spline shaft formation step S16, and these individual steps will be described in greater detail below.

### 1) Material preparation step S11

A material B is prepared by cutting a pipe A having a predetermined diameter to a predetermined length by means of a cutting machine. In this case, a diameter that is suitable for a head formation portion 21 to be described later is used as the preferable diameter of the pipe A. Furthermore, a cracking phenomenon in a manufacturing process, etc. should be taken into account. Consequently use is made of a seamless pipe A without a seam as the pipe A.

### 2) Shaft formation step S12

The material B provided by cutting the pipe A to the predetermined length may be divided into the head formation portion 21 and a shaft formation portion 22. The shaft (23) formation step is the step of forming the shaft formation portion 22 into a shaft 23 by reducing the diameter of the shaft formation portion 22.

Preferably, the shaft 23 is formed by reducing the outer diameter of the shaft formation portion 22 by means of a method for introducing the shaft formation portion 22, obtained by excluding the head formation portion 21 from the material B, into a forming machine and then forming the shaft 23.

When the shaft 23 is formed using the forming machine, as described above, a hollow shape is provided in such a manner that the outer diameter of the shaft formation portion 22 is reduced, the length of the shaft formation portion 22 is increased, and the thickness of the shaft formation portion 22 is also increased. The effect of reducing weight while maintaining durability may be provided.

It is preferred that the outer diameter of the shaft formation portion 22 is gradually reduced by repeating the above-described formation process using the forming machine one or more times depending on the extent to which the outer diameter of the shaft 23 is reduced.

### 3) Cutting step S13

This step is the step that is performed before the formation of the yoke 25, and is the step of forming a split 24 across the head formation portion 21 by means of a method for bisecting the non-reduced head formation portion 21 in an axial direction by means of a cutting machine, a metal laser cutting machine, or the like.

### 4) Yoke formation step S14

The yoke formation step S14 is the step of forming the yoke 25. Both the opposite members of the yoke are formed by means of a pressing method (rolling) of introducing the bisected head formation portion 21 into a die and then pressing an upper press die into the inside of the head formation portion 21.

### 5) Pinhole formation step S15

The yoke 25 formed in the head formation portion 21 requires a pinhole 26 into which a needle roller bearing coupled to a neighboring counterpart yoke 25 via a cross axis is fitted. Accordingly, the pinhole 26 is formed across both the opposite members of the yoke 25.

The pinhole 26 is formed to have a desired diameter through drilling in the state in which a sufficient thickness has been provided through drawing using a press so that a needle roller bearing can be stably fitted into the pinhole 26.

### 6) Spline shaft formation step S16

The spline shaft 27 is formed on the outer surface of the hollow shaft 23 that has been reduced through forming using the forming machine, as described above.

FIG. 3 shows a process of manufacturing another example of the shaft joint of a universal joint, according to a method that is not part of the present invention.

This process of manufacturing the shaft joint 2 of a universal joint 1 using a pipe A, in which a yoke 25 is integrated with the shaft joint 2, is performed in the sequence of: 1) a material preparation step Sill; 2) a shaft formation step S112; 3) a preliminary yoke formation step S113; 4) a cutting-away step S114 for the formation of a yoke; 5) a pinhole formation step S115; and 6) a spline shaft formation step S116, and these individual steps will be described in greater detail below.

### 1) Material preparation step Sill

A material B is prepared by cutting a pipe A having a predetermined diameter to a predetermined length by means of a cutting machine. In this case, a diameter that is suitable for a head formation portion 21 to be described later is used as the preferable diameter of the pipe A. Furthermore, when a cracking phenomenon in a manufacturing process, etc. are taken into account, it is preferable to use a seamless pipe A without a seam as the pipe A.

### 2) Shaft formation step S112

The material B provided by cutting the pipe A to the predetermined length may be divided into the head formation portion 21 and a shaft formation portion 22. The shaft (23) formation step is the step of forming the shaft formation portion 22 into a shaft 23 by reducing the diameter of the shaft formation portion 22.

Preferably, the shaft 23 is formed by reducing the outer diameter of the shaft formation portion 22 by means of a method for introducing the shaft formation portion 22, obtained by excluding the head formation portion 21 from the material B, into a forming machine and then forming the shaft 23.

When the shaft 23 is formed using the forming machine, as described above, a hollow shape is provided in such a manner that the outer diameter of the shaft formation portion 22 is reduced, the length of the shaft formation portion 22 is increased, and the thickness of the shaft formation portion 22 is also increased. The effect of reducing weight while maintaining durability may be provided.

It is preferred that the outer diameter of the shaft formation portion 22 is gradually reduced by repeating the above-described formation process using the forming machine one or more times depending on the extent to which the outer diameter of the shaft 23 is reduced.

### 3) Preliminary yoke formation step S113

The pipe A is configured to have a diameter that is suitable for a head formation portion. A preliminary yoke is formed by means of a pressing method (rolling) of introducing the head formation portion into a die and then pressing an upper press die into the inside of the head formation portion 21.

In this case, the opposite members of the yoke are in the state of being connected to each other, and the preliminary yoke is formed in the shape of a rectangular container with an open top.

### 4) Cutting-away step S114 for the formation of a yoke

The cutting step is the step of providing a yoke. The yoke that is formed at the preliminary yoke formation step is configured to have the connected members. At this cutting step, the portions other than the yoke are cut away.

The cutting-away step may be performed by means of a machine tool, such as a milling machine, or a metal laser cutting machine.

### 5) Pinhole formation step S115

The yoke 25 formed in the head formation portion 21 requires a pinhole 26 into which a needle roller bearing coupled to a neighboring counterpart yoke 25 via a cross axis is fitted. Accordingly, the pinhole 26 is formed across both the opposite members of the yoke 25.

The pinhole 26 is formed to have a desired diameter through drilling in the state in which a sufficient thickness has been provided through drawing using a press so that a needle roller bearing can be stably fitted into the pinhole 26.

### 6) Spline shaft formation step S116

The spline shaft 27 is formed on the outer surface of the hollow shaft 23 that has been reduced through forming using the forming machine, as described above.

The formation of the spline shaft may be performed by any one of a press method, a forming method using a forming machine, and a rolling method. These forming methods are commonly used methods, and thus detailed descriptions thereof will be omitted.

### - Manufacture of the pipe joint -

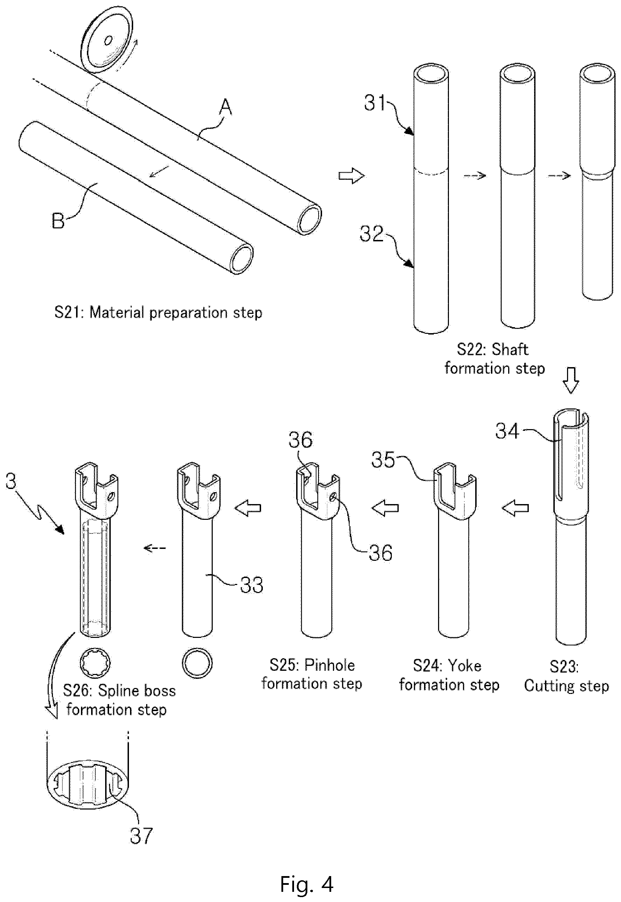

FIG. 4 shows a view showing a process of manufacturing the pipe joint of the universal joint that is provided by the present invention.

The process of manufacturing the pipe joint 3 of a universal joint 1 using a pipe A according to the present invention, in which a yoke 35 is integrated with the pipe joint 3, is performed in the sequence of: 1) a material preparation step S21; 2) a tube formation step S22; 3) a cutting step S23 for the formation of a head corresponding to a yoke 35; 4) a yoke formation step S24; 5) a pinhole formation step S25; and 6) a spline boss formation step S26.

### 1) Material preparation step S11

A material B is prepared by cutting a pipe A having a predetermined diameter to a predetermined length by means of a cutting machine. In this case, a diameter that is suitable for a head formation portion 31 to be described later is used as the preferable diameter of the pipe A. Furthermore, a cracking phenomenon in a manufacturing process, etc. should be taken into account. Consequently use is made of a seamless pipe A without a seam as the pipe A.

### 2) Tube formation step S22

The material B provided by cutting the pipe A to the predetermined length may be divided into the head formation portion 31 and a shaft formation portion 32. The tube formation step is the step of forming the tube formation portion 32 into a tube 33 by reducing the diameter of the tube formation portion 32.

Preferably, the tube 33 is formed by reducing the outer diameter of the tube formation portion 32 by means of a method for introducing the tube formation portion 32, obtained by excluding the head formation portion 31 from the material B, into a forming machine and then forming the tube 33 so that the spline shaft 27 of the above-described shaft joint 2 can be inserted into the tube 33.

When the tube 33 is formed using the forming machine, as described above, a hollow shape is provided in such a manner that the outer diameter of the tube formation portion 32 is reduced, the length of the tube formation portion 32 is increased, and the thickness of the tube formation portion 32 is also increased. The effect of reducing weight while maintaining durability may be provided.

It is preferred that the outer diameter of the tube formation portion 32 is gradually reduced by repeating the above-described formation process using the forming machine one or more times depending on the extent to which the outer diameter of the tube 33 is reduced.

### 3) Cutting step S13

This step is the step that is performed before the formation of the yoke 35, and is the step of forming a split 34 across the head formation portion 31 by means of a method for bisecting the non-reduced head formation portion 31 in an axial direction by means of a cutting machine, a metal laser cutting machine, or the like.

### 4) Yoke formation step S14

The yoke formation step S14 is the step of forming the yoke 25. Both the opposite members of the yoke are formed by means of a pressing method (rolling) of introducing the bisected head formation portion 31 into a die and then pressing an upper press die into the inside of the head formation portion 31.

### 5) Pinhole formation step S15

The yoke 35 formed in the head formation portion 31 requires a pinhole 36 into which a needle roller bearing coupled to a neighboring counterpart yoke 35 via a cross axis is fitted. Accordingly, the pinhole 36 is formed across both the opposite members of the yoke 35.

The pinhole 36 is formed to have a desired diameter through drilling in the state in which a sufficient thickness has been provided through drawing using a press so that a needle roller bearing can be stably fitted into the pinhole 36.

### 6) Spline boss formation step S16

A spline boss 37 is formed on the inner surface of the hollow tube 33 that has been reduced through forming using the pipe (A) forming machine, as described above.

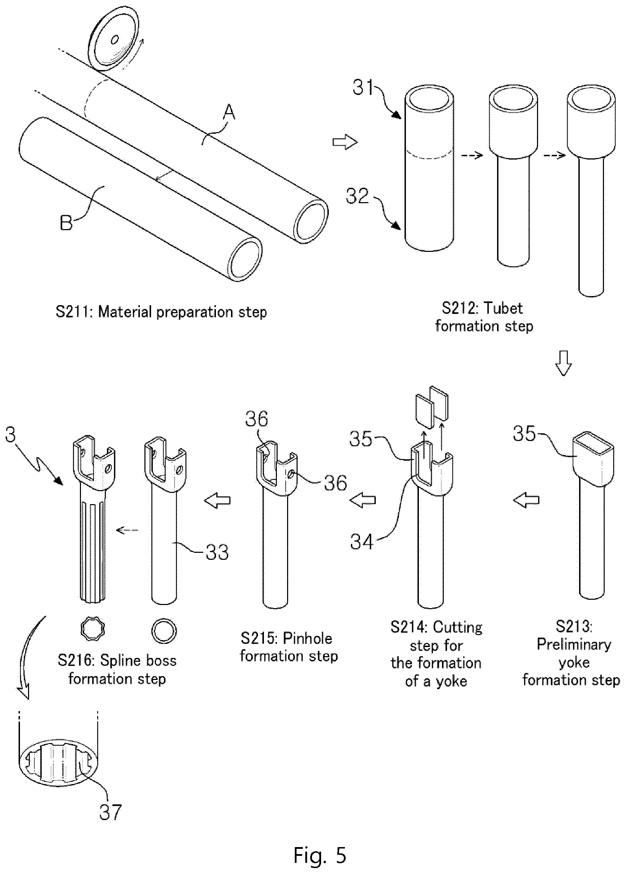

FIG. 5 shows a process of manufacturing another example of the pipe joint of a universal joint, according to a method that is not part of the present invention. This process of manufacturing the pipe joint 3 of a universal joint 1 using a pipe A, in which a yoke 35 is integrated with the pipe joint 3, is performed in the sequence of: 1) a material preparation step S211; 2) a tube formation step S212; 3) a preliminary yoke formation step S213; 4) a cutting step S214 for the formation of a yoke; 5) a pinhole formation step S215; and 6) a spline boss formation step S216.

### 1) Material preparation step Sill

A material B is prepared by cutting a pipe A having a predetermined diameter to a predetermined length by means of a cutting machine. In this case, a diameter that is suitable for a head formation portion 31 to be described later is used as the preferable diameter of the pipe A. Furthermore, when a cracking phenomenon in a manufacturing process, etc. are taken into account, it is preferable to use a seamless pipe without a seam as the pipe A.

### 2) Tube formation step S212

The material B provided by cutting the pipe A to the predetermined length may be divided into the head formation portion 31 and a shaft formation portion 32. The tube formation step is the step of forming the tube formation portion 32 into a tube 33 by reducing the diameter of the tube formation portion 32.

Preferably, the tube 33 is formed by reducing the outer diameter of the tube formation portion 32 by means of a method for introducing the tube formation portion 32, obtained by excluding the head formation portion 31 from the material B, into a forming machine and then forming the tube 33 so that the spline shaft 27 of the above-described shaft joint 2 can be inserted into the tube 33.

When the tube 33 is formed using the forming machine, as described above, a hollow shape is provided in such a manner that the outer diameter of the tube formation portion 32 is reduced, the length of the tube formation portion 32 is increased, and the thickness of the tube formation portion 32 is also increased. The effect of reducing weight while maintaining durability may be provided.

It is preferred that the outer diameter of the tube formation portion 32 is gradually reduced by repeating the above-described formation process using the forming machine one or more times depending on the extent to which the outer diameter of the tube 33 is reduced.

### 3) Preliminary yoke formation step S213

The pipe A is configured to have a diameter that is suitable for a head formation portion. A preliminary yoke is formed by means of a pressing method (rolling) of introducing the head formation portion into a die and then pressing an upper press die into the inside of the head formation portion.

In this case, the opposite members of the yoke are in the state of being connected to each other, and the preliminary yoke is formed in the shape of a rectangular container with an open top.

### 4) Cutting-away step S214 for the formation of a yoke

The cutting step is the step of providing a yoke. The yoke that is formed at the preliminary yoke formation step is configured to have the connected members. At this cutting step, the portions other than the yoke are cut away.

The cutting-away step may be performed by means of a machine tool, such as a milling machine, or a metal laser cutting machine.

### 5) Pinhole formation step S215

The yoke 35 formed in the head formation portion 31 requires a pinhole 36 into which a needle roller bearing coupled to a neighboring counterpart yoke 35 via a cross axis is fitted. Accordingly, the pinhole 36 is formed across both the opposite members of the yoke 35.

The pinhole 36 is formed to have a desired diameter through drilling in the state in which a sufficient thickness has been provided through drawing using a press so that a needle roller bearing can be stably fitted into the pinhole 36.

### 6) Spline boss formation step S216

A spline boss 37 is formed on the inner surface of the hollow tube 33 that has been reduced through forming using the pipe (A) forming machine, as described above.

The formation of the spline boss 37 may be performed by any one of a press method, a forming method using a forming machine, and a rolling method. These forming methods are commonly used methods, and thus detailed descriptions thereof will be omitted.

Meanwhile, although not mentioned in connection with the present invention, it is apparent that a heat treatment step may be additionally applied to the spline shaft 27 and the spline boss 37 formed on the shaft joint 2 and the pipe joint 3, respectively, and the yokes 25 and 35 for the purpose of increasing abrasion resistance.

When the shaft joint 2 and the pipe joint 3 are manufactured using the method for manufacturing the universal joint 1 using the pipe A, as described above, the method may considerably reduce the cost of the materials B than the conventional methods for rolling a round rod. In particular, the shaft joint 2 may be provided in a hollow form, and thus the weight of a product may be considerably reduced, which will also contribute to the effort to reduce part weight in order to improve fuel efficiency in the automotive industry.

Although the specific embodiments have been described in the detailed description of the present invention, it will be apparent that various modifications may be made within a range that does not depart from the scope of the present invention. Therefore, the range of protection of the present invention should be defined based on only the attached claims.

## Claims

1. A method for manufacturing a shaft joint (2) of a universal joint using a pipe, the universal joint (1) comprising a combination of a shaft joint (2) and a pipe joint (3) integrated with yokes (25 and 35), respectively;
the shaft joint (2) being manufactured by:
a material preparation step (S11) of preparing a material (B) by cutting a seamless pipe (A) to a predetermined length;
a shaft formation step (S12) of forming a shaft (23) by reducing an outer diameter of a shaft formation portion (22), obtained by excluding a head formation portion (21) from the material (B), by forming an outside of the shaft formation portion (22) with a forming machine;
a cutting step (S13) of bisecting the non-reduced head formation portion (21) by forming a split (24) across the non-reduced head formation portion (21) in an axial direction by means of a cutting machine or a metal laser cutting machine;
a yoke formation step (S14) of forming both opposite members of a yoke (25) in a head by means of a pressing method of introducing the bisected head formation portion (21) into a die and then pressing an upper press die into an inside of the head formation portion (21);
a pinhole formation step (S15) of forming a pinhole (26) across the yoke (25); and
a spline shaft formation step (S16) of forming a spline shaft (27) on an outer surface of the reduced hollow shaft (23).

2. A method for manufacturing a pipe joint (3) of a universal joint using a pipe, the universal joint (1) comprising a combination of a shaft joint (2) and a pipe joint (3) integrated with yokes (25), respectively;
the pipe joint (3) being manufactured by:
a material preparation step (S21) of preparing a material (B) by cutting a seamless pipe (A) to a predetermined length;
a tube formation step (S22) of reducing an outer diameter of a tube formation portion (32), obtained by excluding a head formation portion (31) from the material (B), by forming an outside of the tube formation portion (32) with a forming machine;
a cutting step (S23) of bisecting the non-reduced head formation portion (31) by forming a split (34) across the non-reduced head formation portion (31) in an axial direction by means of a cutting machine or a metal laser cutting machine;
a yoke formation step (S24) of forming both opposite members of a yoke (35) in a head by means of a pressing method of introducing the bisected head formation portion (21) into a die and then pressing an upper press die into an inside of the head formation portion (21);
a pinhole formation step (S26) of forming a pinhole (36) across the yoke (35); and
a spline boss formation step (S27) of forming a spline boss (37) on an inner surface of the reduced hollow tube (33).

## Patentansprüche

1. Verfahren zur Herstellung eines Wellengelenks (2) eines Universalgelenks unter Verwendung eines Rohres, wobei das Universalgelenk (1) eine Kombination aus einem Wellengelenk (2) und einem mit Gelenkköpfen (25 bzw. 35) integrierten Rohrgelenk (3) umfasst;
wobei das Wellengelenk (2) durch Folgendes hergestellt wird:
einen Materialvorbereitungsschritt (S11) zum Vorbereiten eines Materials (B) durch Schneiden eines nahtlosen Rohres (A) auf eine vorbestimmte Länge;
einen Wellenbildungsschritt (S12) zum Bilden einer Welle (23) durch Kürzen eines Außendurchmessers eines Wellenbildungsabschnitts (22), der durch Ausschließen eines Kopfbildungsabschnitts (21) aus dem Material (B) erhalten wird, durch Bilden einer Außenseite des Wellenbildungsabschnitts (22) mit einer Formmaschine;
einen Schneidschritt (S13) des Teilens des nicht gekürzten Kopfbildungsabschnitts (21) durch Ausbilden eines Spalts (24) über den nicht gekürzten Kopfbildungsabschnitt (21) in einer axialen Richtung, mittels einer Schneidemaschine oder einer Metall-Laserschneidmaschine;
einen Gelenkkopfbildungsschritt (S14) zum Bilden beider gegenüberliegender Elemente eines Gelenkkopfs (25) in einem Kopf mittels eines Pressverfahrens zum Einführen des geteilten Kopfbildungsabschnitts (21) in eine Matrize und dann zum Pressen einer oberen Pressmatrize in ein Inneres des Kopfbildungsabschnitts (21);
einen Nadellochbildungsschritt (S15) zum Bilden eines Nadellochs (26) über den Gelenkkopf (25); und
einen Keilwellenausbildungsschritt (S16) zum Ausbilden einer Keilwelle (27) an einer Außenfläche der gekürzten Hohlwelle (23).

2. Verfahren zum Herstellen eines Rohrgelenks (3) eines Universalgelenks unter Verwendung eines Rohres, wobei das Universalgelenk (1) eine Kombination aus einem Wellengelenk (2) und einem Rohrgelenk (3) umfasst, die jeweils mit Gelenkköpfen (25) integriert sind;
wobei das Rohrgelenk (3) durch Folgendes hergestellt wird:
einen Materialvorbereitungsschritt (S21) zum Vorbereiten eines Materials (B) durch Schneiden eines nahtlosen Rohres (A) auf eine vorbestimmte Länge;
einen Rohrbildungsschritt (S22) zum Kürzen eines Außendurchmessers eines Rohrbildungsabschnitts (32), der durch Ausschließen eines Kopfbildungsabschnitts (31) aus dem Material (B) erhalten wird, durch Bilden einer Außenseite des Rohrbildungsabschnitts (32) mit einer Formmaschine;
einen Schneideschritt (S23) des Teilens des nicht gekürzten Kopfbildungsabschnitts (31) durch Bilden eines Spalts (34) über den nicht gekürzten Kopfbildungsabschnitt (31) in einer axialen Richtung, mittels einer Schneidemaschine oder einer Metall-Laserschneidmaschine;
einen Gelenkkopfbildungsschritt (S24) zum Bilden beider gegenüberliegender Elemente eines Gelenkkopfs (35) in einem Kopf mittels eines Pressverfahrens zum Einführen des halbierten Kopfbildungsabschnitts (21) in eine Matrize und dann zum Pressen eines oberen Presswerkzeugs in ein Inneres des Kopfbildungsabschnitts (21);
einen Nadellochbildungsschritt (S26) zum Bilden eines Nadellochs (36) über den Gelenkkopf (35); und
einen Keilnabenbildungsschritt (S27) zum Ausbilden einer Keilnabe (37) an einer Innenfläche des gekürzten hohlen Rohres (33).

## Revendications

1. Procédé de fabrication d'un joint d'arbre (2) d'un joint universel à l'aide d'un tuyau, le joint universel (1) comprenant une combinaison d'un joint d'arbre (2) et d'un joint de tuyau (3) intégré à des culasses (25 et 35), respectivement ;
le joint d'arbre (2) étant fabriqué par :
une étape de préparation de matériau (S11) consistant à préparer un matériau (B) en coupant un tuyau sans soudure (A) à une longueur prédéterminée ;
une étape de formation d'arbre (S12) consistant à former un arbre (23) en réduisant un diamètre extérieur d'une partie de formation d'arbre (22), obtenue en excluant une partie de formation de tête (21) du matériau (B), en formant un extérieur de la partie de formation d'arbre (22) avec une machine de formage ;
une étape de coupe (S13) consistant à couper en deux la partie de formation de tête (21) non réduite en formant une fente (24) à travers la partie de formation de tête (21) non réduite dans une direction axiale au moyen d'une machine de coupe ou d'une machine de découpe au laser pour métal ;
une étape de formation de culasse (S14) consistant à former les deux éléments opposés d'une culasse (25) dans une tête au moyen d'un procédé de pressage consistant à introduire la partie de formation de tête (21) coupée en deux dans une matrice puis à presser une matrice de presse supérieure dans un intérieur de la partie de formation de tête (21) ;
une étape de formation de trou d'épingle (S15) consistant à former un trou d'épingle (26) à travers la culasse (25) ; et
une étape de formation d'arbre cannelé (S16) consistant à former un arbre cannelé (27) sur une surface extérieure de l'arbre creux réduit (23).

2. Procédé de fabrication d'un joint de tuyau (3) d'un joint universel à l'aide d'un tuyau, le joint universel (1) comprenant une combinaison d'un joint d'arbre (2) et d'un joint de tuyau (3) intégrés à des culasses (25), respectivement ;
le joint de tuyau (3) étant fabriqué par :
une étape de préparation de matériau (S21) consistant à préparer un matériau (B) en coupant un tuyau sans soudure (A) à une longueur prédéterminée ;
une étape de formation de tube (S22) consistant à réduire un diamètre extérieur d'une partie de formation de tube (32), obtenue en excluant une partie de formation de tête (31) du matériau (B), en formant un extérieur de la partie de formation de tube (32) avec une machine de formage ;
une étape de coupe (S23) consistant à couper en deux la partie de formation de tête non réduite (31) en formant une fente (34) à travers la partie de formation de tête non réduite (31) dans une direction axiale au moyen d'une machine de découpe ou d'une machine de découpe au laser pour métal ;
une étape de formation de culasse (S24) consistant à former les deux éléments opposés d'une culasse (35) dans une tête au moyen d'un procédé de pressage consistant à introduire la partie de formation de tête (21) coupée en deux dans une matrice puis à presser une matrice de presse supérieure dans un intérieur de la partie de formation de tête (21) ;
une étape de formation de trou d'épingle (S26) consistant à former un trou d'épingle (36) à travers la culasse (35) ; et
une étape de formation de bossage cannelé (S27) consistant à former un bossage cannelé (37) sur une surface intérieure du tube creux réduit (33).
